# EUROPEAN PATENT APPLICATION

(11) **EP 2 120 164 A1**
(43) Date of publication of application: **18.11.2009**
(21) Application number: 09160028.8
(22) Date of filing: 12.05.2009
(51) Int. Cl.: G06F 17/30

(54) **Unified media file architecture**

(30) Priority: 12.05.2008 US 52633 P; 12.05.2008 US 52640 P; 14.05.2008 US 127813 P; 14.05.2008 US 127796 P; 21.07.2008 US 177112
(71) Applicant: Research In Motion Limited, Waterloo, Ontario N2L 3W8 (CA)
(72) Inventor: Thomas, Edward E., Waterloo Ontario N2L 3W8 (CA); Mc Sheffrey, Grant, Waterloo Ontario N2L 3W8 (CA); Agampodi, Thusha, Waterloo Ontario N2L 3W8 (CA)
(74) Representative: Terry, Martin Albert Mortimer

(57) **Abstract**

Apparatus and methods for a unified media file architecture provide a mechanism to enhance user interaction with multimedia devices. Additional apparatus, systems, and methods are disclosed.

## Description

### RELATED APPLICATIONS

This application claims the benefit of priority under 35 U.S.C. 119(e) to United States Provisional Patent Application Serial No. 61/127,796 filed 14 May 2008, to United States Provisional Patent Application Serial No. 61/127,813 filed 14 May 2008, to United States Provisional Patent Application Serial No. 61/052,640 filed 12 May 2008, and to United States Provisional Patent Application Serial No. 61/052,633 filed 12 May 2008, which are incorporated herein by reference in their entirety.

### BACKGROUND

Access to information is an important factor in the functioning of modem society. Improvements to the flow of information enhance one's ability to interact with others, to respond to changing needs, and to avail oneself of enjoyment from processing various media based information.

### BRIEF DESCRIPTION OF THE DRAWINGS

Various example embodiments are further described with reference to the following accompanying drawings.

Figure 1 is a functional block diagram of system for managing media content.

Figure 2 is a more detailed block diagram of the processing modules shown in Figure 1 according to an example embodiment.

Figure 3 is a flow chart of a method of managing media content according to an example embodiment.

Figure 4 is a flow chart of a method of managing media content according to an alternative embodiment.

Figure 5 illustrates an embodiment of a media wireless sync feature installed on a PC with installation of an associated wireless server, according to various embodiments.

Figure 6 illustrates an embodiment of an example of a user interface showing connectivity, according to various embodiments.

Figure 7 illustrates an embodiment of an example of a user interface when accessing a home music library, according to various embodiments.

Figure 8 illustrates an embodiment of an example of viewing a media library, according to various embodiments.

Figure 9 shows an embodiment of an example of a user interface with respect to adding music to the download manager, according to various embodiments.

Figure 10 shows an embodiment of an example of a user interface for viewing a download manager, according to various embodiments.

Figure 11 depicts a diagram of an embodiment of a system having a controller and a memory system, according to various embodiments.

### DETAILED DESCRIPTION

Certain specific details are set forth in the following description and figures to provide a thorough understanding of various embodiments. Those of ordinary skill in the relevant art will understand that they can practice other embodiments without one or more of the details described below. In addition, the various methods are described by reference to a sequence of operations in the following disclosure; however, the description as such is for providing a clear implementation of embodiments of the disclosure, and the particular sequence described should not be taken as required.

In general, it is contemplated that the various systems, methods, and computer readable media disclosed herein will be implemented within a system for managing media content. Such a system may generally be described as a computer-implemented or a computerized system that includes "subsystems" for a unified media file architecture in the manner described below.

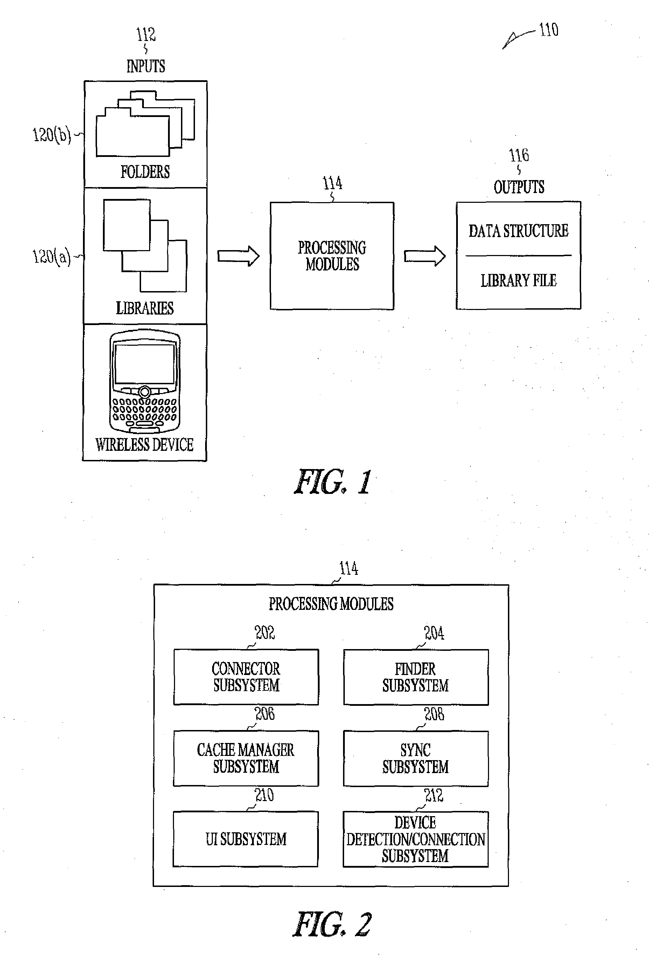

***Operating Environment**.* Figure 1 is a functional block diagram of a system for managing media content. The system for managing media content 110 comprises inputs 112, processing modules 114 and outputs 116.

The inputs 112 comprise one or more sources of media content 120 (also referred to herein as "source" or "sources"). Media content may include content in any media format. Some examples of content may include, but are not limited to, audio files, video files, image files, multimedia files, and the like. Audio file formats may include, but are not limited to, MP3, AIFF, WAV, MPEG-4, AAC, and Apple Lossless. Other example file formats for media content include, but are not limited to, files having extensions doc, dot, wpd, txt, xls, pdf, ppt, jpg, jpeg, png, bmp, gif, html, htm, zip, tif, tiff, wmf, and the like.

In one embodiment, the one or more sources of media 120 content may be libraries 120(a) such as libraries for media players including, but not limited to, iTunes media players, Windows Media Player (WMP), RealPlayer and the like. Each library 120(a) may have N collections. A collection is a subset of the files in the library. The collections may be comprised of references to the files. Each collection may refer to anywhere from zero files to all of the files in the library. An example of a collection for a music library may be a playlist. In another embodiment, the sources of media content 120 may be files within one more folders 120(b) on a single computer system or on multiple computer systems.

The processing modules 114 comprise software and/or hardware subsystems to transfer media content from media sources to devices with media players. In some embodiments, the various subsystems may be implemented with software that is executable by a processor. In other embodiments, the various subsystems may be implemented with computer hardware. In still further embodiments, the various subsystems may be implemented with a combination of computer hardware and software.

The processing modules operate as a "connector" meaning that the processing modules interface between the media sources and different types of devices with media players including, but not limited to mobile wireless devices. The processing modules may use, but are not limited to, a Windows COM interface when connecting to the media sources. In addition, the processing modules create a representation (e.g., a library or libraries) of the media content available from multiple sources.

In some embodiments, the output 116 of the processing modules is a representation created by the processing modules. In some embodiments, the representation may also be maintained by the processing modules. In other embodiments, the output also comprises device specific data for a mobile wireless device or a media player. In still other embodiments, the output also comprises metadata such as metadata based on user preferences or device settings.

In an example embodiment the representation is any means for identifying the content of the media source files. In some embodiments, the representation is a library file that is created by the processing modules. The library file contains metadata for the media content available in the one or more media sources, but omits the actual media content. The library file may be organized using a standard format that represents the information contained in the media sources. In some embodiments, the standard format is a compressed format and/or a format that is substantially smaller than the media library itself. For example, a media library with 30 GB of audio files may be represented by the media sync engine 104 in a file that may be 200 KB.

In operation, the system for managing media content shown in Figure 1 creates a representation of the media content available in one or more media sources and provides a means for accessing the media content from any device with a media player (such as a mobile wireless device). The device may browse the representation either locally or remotely and may select individual media content items to copy or transfer from the media source to the device. After selection, all or a portion of the media content item may be transferred to the device and may be played on a media player on the device.

Figure 2 is a more detailed block diagram of the processing modules 114 shown in Figure 1 according to an example embodiment. In the example embodiment shown in Figure 2, the processing modules 114 for the system for managing media content 110 comprise a connector subsystem 202, a finder subsystem 204, a cache manager subsystem 206, a sync subsystem 208, a user interface subsystem 210, and a device detection/connection subsystem 212.

The connector subsystem 202 identifies specific sources of media content such as libraries or folders/files. In one embodiment, the connector subsystem 202 performs a discovery function that finds specific sources. The connector subsystem 202 may comprise one or more individual connectors. A connector is software and/or hardware that is capable of communicating with one or more sources of media content using the applicable application programming interface (API), protocols, file formats, etc. In one embodiment, each one of the connectors is capable of communicating with a specific type of media content. For example, one of the connectors may be for use with an iTunes library. In this example, when an instance of an iTunes library is discovered, the connector retrieves the collections from that instance of the iTunes library and provides information about the collections to the cache manager subsystem 206. In another embodiment, some of the connectors may each be capable of communicating with more than one type of media content. In a further embodiment, a single connector is capable of communicating with any type of media content.

In one embodiment, a connector may be a read-only connector, an index connector, or a writable connector. A read-only connector may read a source such as a library, but may not modify the source. An index connector also may not modify a source, but the index connector may more efficiently read the source than the read-only connector. In this embodiment, the index connector may implement an API or an optimized query format for the source. A writable connector may also modify a source such as a library. A connector that modifies a library may perform any action that changes the library, including writing data to the library or deleting data from the library. For example, a connector may be used to add a user assigned rating for a song to an iTunes music library. Other examples of actions that change a library include, but are not limited to, creating a playlist, editing a playlist, deleting a song, etc.

Thus, the connector subsystem 202 identifies specific sources of media content and retrieves information about the media content. The connector subsystem 202 may provide the information about the media content to the cache manager subsystem 206.

The finder subsystem 204 provides a discovery mechanism for the connectors. In one embodiment, the finder subsystem 204 identifies what connectors are available to the system for managing media content 110. In another embodiment, the available connectors register with the finder subsystem 204. If a separate connector is used for each source of media content, the particular connectors that are discovered by or registered with the finder subsystem 204 will determine what type of media content may be discovered by the system for managing media content 110.

The cache manager subsystem 206 unifies media content available to a user across multiple sources. The cache manager subsystem 206 may receive information about media content from the connector subsystem 202. In one embodiment, the cache manager subsystem 206 maintains one or more data structures for the media content that is available to transfer to the device. The data structures in the cache manager subsystem 206 unify information about media content that is stored in independent sources. For example, if the same music track is present in multiple libraries (e.g., in a user's iTunes library and in the user's Windows Media Player library), the cache manager subsystem 206 may maintain a single data structure that is an aggregation of the tracks from the different libraries. Alternatively, the cache manager subsystem 206 may maintain a separate data structure for the tracks from each of the different libraries. The cache manager subsystem 206 may store the data structure(s) using any form of data storage. The data storage may be volatile or non-volatile and may be implemented using any method or technology for storing of information. In addition, in some embodiments, the cache manager subsystem 206 may maintain one or more data structures for media that is available to transfer from the device to a computer (e.g., a desktop computer, an enterprise server, a laptop computer, and the like). For example, media files such as pictures or videos may be transferred from the device to the computer. In this case the device, is also treated as another source in the system for managing media content 110.

In some embodiments, the cache manager subsystem 206 may implement connector watchers. A connector watcher monitors one or more sources of media content and determines when the source has changed. For example, if the iTunes xml file changes or if the iTunes library has been updated, the connector watcher that is monitoring the particular source detects the update and updates the appropriate data structure in the cache manager subsystem 206 with the updated information about the media content.

In one embodiment, the cache manager subsystem 206 may also determine which of the available connector(s) to use. For example, if media content may be accessed either by using the iTunes software or through the iTunes xml file, the cache manager subsystem 206 determines whether to use iTunes application connector or the iTunes xml file connector in order to access the iTunes media content. In an alternative embodiment, the finder subsystem 204 may determine which of the available connector(s) to use.

Thus, the cache manager subsystem 206 brings together information about media content from multiple media sources that would otherwise have to be accessed directly from each media source and the cache manager subsystem 206 provides the information to the sync subsystem 208.

The sync subsystem 208 allows a device to be synchronized with all or a subset of the available content from different sources. In one embodiment, the sync subsystem 208 may provide the UI subsystem 210 with information about media content that is available to transfer to the device (also referred to as "available content") as well as information about media content that is already present on the device. The sync subsystem 208 may retrieve information about the available content from the data structure(s) maintained by the cache manager subsystem 206. The information maintained by the cache manager subsystem 206 represents the content available from multiple sources that a user may select to transfer to a device. The sync subsystem 208 may also retrieve information about the content that is already present on the device either from the device itself or from a storage location other than on the device. In addition, in some embodiments, the sync subsystem 208 also allows a computer (e.g., a desktop computer, an enterprise server, a laptop computer, and the like) to be synchronized with all or a subset of the available media content from the device as a source of media content. For example, media files such as pictures or videos may be transferred from the device to the computer.

In some embodiments, the sync subsystem 208 may also maintain a desired library. The desired library identifies the media content that is to be stored on the device after selections from either the user or the system for managing media content are applied. A desired library may include all of the media content in the user's various sources (the available content) or the desired library may be a subset of the available content. In one embodiment, the desired library functions as a filter for the content to be transferred to the device. Rather than transferring all of the content available from the user's various collections of media content, just the content that is selected for the desired library is transferred to the device. The desired library may be selected by the user through the UI subsystem 210 or may be automatically selected by the system for managing media content or may be selected through some combination of both. In an alternative embodiment, the desired library may be maintained by the cache manager subsystem 206 rather than by the sync subsystem 208. In some embodiments, the content of the desired library persists even when an application program to implement the system for managing media content is not running or when a computer system running such an application program is restarted.

In some embodiments, the sync subsystem 208 may also identify the actions to create the desired library on the device (e.g., copying songs or playlists, deleting songs or playlists, etc.) and, in some embodiments, the sync subsystem 208 may manage the actual transfer of media content to create the desire library on the device.

Thus, sync subsystem 208 provides information about both the available content and the content that is already present on the device to the user interface subsystem 210 so that a user may view the information. The sync subsystem 208 may also maintain a desired library and/or determine the actions to synchronize the device with the desired library.

The user interface (UI) subsystem 210 provides a graphical user interface through which a user may access media content from multiple sources. The UI subsystem 210 receives from the sync subsystem 208 aggregated information about media content available from the different sources. The UI subsystem 210 also receives from the sync subsystem 208 information about media content that is already available on the device. The UI subsystem 210 presents this information to the user through a graphical user interface. In one embodiment, the graphical user interface is part of an application program such as a media sync application program running on a computer system other than the device. In another embodiment, the graphical user interface is part of an application program running on the device itself.

The UI subsystem 210 allows the user to browse the available content as well as the content that is currently stored on the device. The UI subsystem 210 may display the content so that it may be browsed by individual media files (songs, photos, movies, etc.) or by groups of media files (e.g., playlists, albums, folders, etc.) or as some combination of both.

The UI subsystem 210 also allows the user to create a desired library (i.e., the media content that the user wishes to have on the device after the media content on the device is updated). In one embodiment, the user may select media content using graphical user interface options for adding a track or playlist to the desired library, removing a track or playlist from the desired library, and so on. In another embodiment, the user may select a graphical user interface option that instructs the system for managing media content 110 to automatically select the media content to be transferred to the device. In some embodiments, the system for managing media content 110 may also automatically select the content to transfer to the device even though the user has not selected such an option. This may occur when the user creates a desired library that requires more space than is available or is allocated for media content on the device. For example, a user may create a desired library with 20 gigabytes of music, but the device only has space for a library with 1 gigabyte of music. In this example, the system for managing media content 110 may automatically select one gigabyte of music from the 20 gigabytes of music in the desired library to transfer to the device.

The UI subsystem 210 may display a current state of the desired library as the user creates or modifies the desired library. In some embodiments, the UI subsystem 210 may also display an indication of what will happen if the current state of the desired library is transferred to the device. If the desired library is too large for the space available on the device, the system for managing media content may further limit the content that is transferred to a subset of the desired library. This may occur if the user creates a desired library that requires more space than is available on the device.

In some embodiments, the UI subsystem 210 may also display information about the device. The UI subsystem 210 may receive information about the device from the device detection and connection subsystem 212. For example, the UI subsystem 210 may display a graphical representation of how much data storage space on the device is currently consumed and how much data storage space the desired library will use on the device. In some embodiments, information about the device capacity may be presented using categories. For example, the categories may include, but are not limited to, "used," "music," and "free." In one embodiment, the categories of data are presented on a memory bar that graphically indicates how much space on the device is "free", how much space on the device is used for "music" or "playlists", and how much space on the device is "used" for other data. In addition, the UI subsystem 210 may also display an amount of "reserve space" in the file system. For example, the UI subsystem 210 may present either just the free space that is available to a user, or the free space as well as an amount of reserve space. However, embodiments are not limited to displaying information in categories or presenting the categories graphically as a memory bar.

Thus, the UI subsystem 210 provides a graphical user interface through which a user is presented a single unified view of media content from multiple sources. The user may use the media content to browse and manage the media content. In addition, in some embodiments, the UI subsystem 210 may also graphically indicate when a device is connected to the system for managing media content 110. For example, when the device detection and connection subsystem 212 determines that a device is connected, the UI subsystem 210 may display an image of a device on the graphical user interface.

The device detection and connection subsystem 212 identifies when a device is connected or disconnected from the system for managing media content. A device may be connected using a wireless connection or a wired connection such as a High Speed USB (Universal Serial Bus) connection.

When a device is connected to the system, the device detection and connection subsystem 212 may also obtain information from the device such as information about device characteristics (e.g., screen size, screen resolution, etc.) device capabilities (e.g., file system and supported file formats), files already available on the device, device capacity or available storage space, and so on. In an example embodiment, the information from the device may influence what types of connectors are selected by the connector subsystem 202. For example, if the device only supports one type of file format, then only the connectors for libraries with files of that particular format may be invoked. As a result, the information maintained in the cache manager subsystem 206 and provided to the sync subsystem 208 as available content for the desired library will only be files that are supported by the device. In this sense, the information from the device is used to filter the available content. In one embodiment, this filter may contain supported extensions by the device, and this filter will be applied on the desired library in order to get a subset of media files/playlists that can be played/viewed on the device. The supported extensions filter will vary by device version, or the software version running on the device. A filter may be applied on the content read from the device. For an example, if the device contains media previously synched from more than one computer, a filter may be applied to only read in the data previously synched from the current computer the media app is running from. In addition, in some embodiments, the device detection/connection subsystem 212 may also enable a user's access to a device by prompting for a password from the user and then providing the password to the device.

The processing modules 114 for the system for managing media content 110 are not limited to the connector subsystem 202, the finder subsystem 204, the cache manager subsystem 206, the sync subsystem 208, the user interface subsystem 210, and the device detection/connection subsystem 212. The subsystems described by reference to Figure 2 are for illustrative purposes only. Different implementations of the system for managing media content may comprise additional or different subsystems that will allow a user to transfer media content from multiple media sources to a mobile device.

The embodiments shown in Figures 1 and 2 may be implemented as a desktop application to transfer media content from multiple sources to a mobile wireless device. Alternatively, the embodiments shown in Figure 1 and 2 may allow a user to use a mobile wireless device to update content already present on the mobile wireless device with media content from multiple sources.

In an example embodiment with a desktop application, the desktop application for managing media content is launched on a personal computer (PC). In some embodiments, the desktop application may be automatically launched on startup of the PC. In other embodiments, the desktop application may be launched on detection of a device connection. In still further embodiments, the user may launch the desktop application.

Continuing the example embodiment for a desktop application, if the connectors available to the desktop application are not known, the finder subsystem 204 may identify the available connectors. In an alternative embodiment, the available connectors are predetermined. Using the available connectors, the connector subsystem 202 may identify specific instances of libraries and provides information about the available content to the cache manager subsystem 206. In one embodiment, the cache manager subsystem 206 creates and maintains a unified cache of available content.

Continuing with the example embodiment for a desktop application, if the desktop application was not launched in response to a device connection, the detection and connection subsystem 212 will watch for device connections. If the desktop application is closed or the PC is shut down, the unified cache of available content may have to be recreated by relaunching the application and repeating the process described above. Alternatively, the unified cache of available content may be persistent and thus may not need to be recreated after the desktop application is closed although it may need to be updated if the collections have changed in any of the libraries after the application was closed.

Upon detection of a device connection, the device detection and connection subsystem 212 retrieves information about the device characteristics. The connector subsystem 202 may retrieve information about any media files present on the device and provide the information to the cache manager subsystem 206.

Continuing with the example embodiment for a desktop application, the sync subsystem 208 provides the UI subsystem 210 with information from the cache management subsystem. The information may include both information about the content that is available to transfer to the device as well as information about content that is already present on the device. The UI subsystem 210 receives and displays selections for the desired library through the graphical user interface of the desktop application. In one embodiment, the UI subsystem 210 displays the selections for the desired library and also displays an indication of what will happen when the desired library is transferred to the device. In another embodiment, rather than receiving selections for the desired library, the UI subsystem 210 receives an indication that the user wants the system to select the files to transfer to the device.

In one embodiment, when the desired library is complete, a "sync" button is pressed by a user on the graphical user interface of the desktop application. In response to pressing the "sync" button, the sync subsystem 208 creates a list of transactions (e.g., copy a file or playlist, delete a file or playlist, etc.) to transfer the desired library to the device. Finally, the desired library is transferred to the device. In some embodiments, additional processing may occur during the transfer of data to the device. For example metadata may be injected into one or more of the files being transferred.

Turning now to the alternative embodiment, the UI subsystem 210 may provide a graphical user interface directly on the mobile wireless device. In this embodiment, the device may be connected wirelessly to the system for managing media content and the user may browse available content and create a desired library through a graphical user interface on the wireless device. After the user selects a "sync" button on the graphical user interface, the process continues as described above with the sync subsystem 208 receiving the sync request and determining how to update the device to match the desired library. Finally, a list of transactions is created and the file transferred is executed.

***Methods.*** In this section, particular methods of example embodiments are described by reference to a series of flow charts. In one embodiment, the methods to be performed constitute computer programs made up of computer-executable instructions.

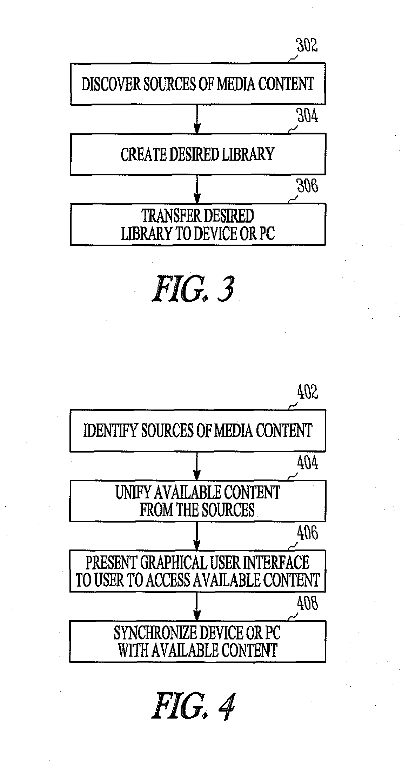

Figure 3 is a flow chart of a method of managing media content according to an example embodiment. As shown in Figure 3, two or more sources of media content are discovered (block 302). A desired library is created comprising a subset of available content from the one or more sources of media content (block 304). The desired library is transferred to a mobile wireless device (block 306). In an alternative embodiment, the desired library is transferred to a computer such as a desktop computer, a laptop computer or a enterprise server, etc.

In some embodiments, transferring the desired library comprises determining how the desired library differs from the content already present on the mobile wireless device and then adding media content to the mobile wireless device and/or removing media content from the mobile wireless device.

Figure 4 is a flow chart of a method of managing media content according to an alternative embodiment. As shown in Figure 4, one or more sources of media content are identified (block 402). Available content is unified from the one or more sources of media content (block 404). A graphical user interface is presented through which a user may access the available content (block 406). A device is synchronized with the available content from the one or more sources of media content (block 408). In an alternative embodiment, a computer (such as a desktop computer, a laptop computer or a enterprise server, etc.) is synchronized with the available content including content from a device as a source. In one embodiment, synchronization content to a computer from a device may happen over a wired connection or a wireless connection. For example, a user may select some media files on the device to be synchronized to the computer.

***Example Implementations.*** Various examples of systems and methods for embodiments of the invention have been described above. In this section provides several example implementations of the various systems and methods.

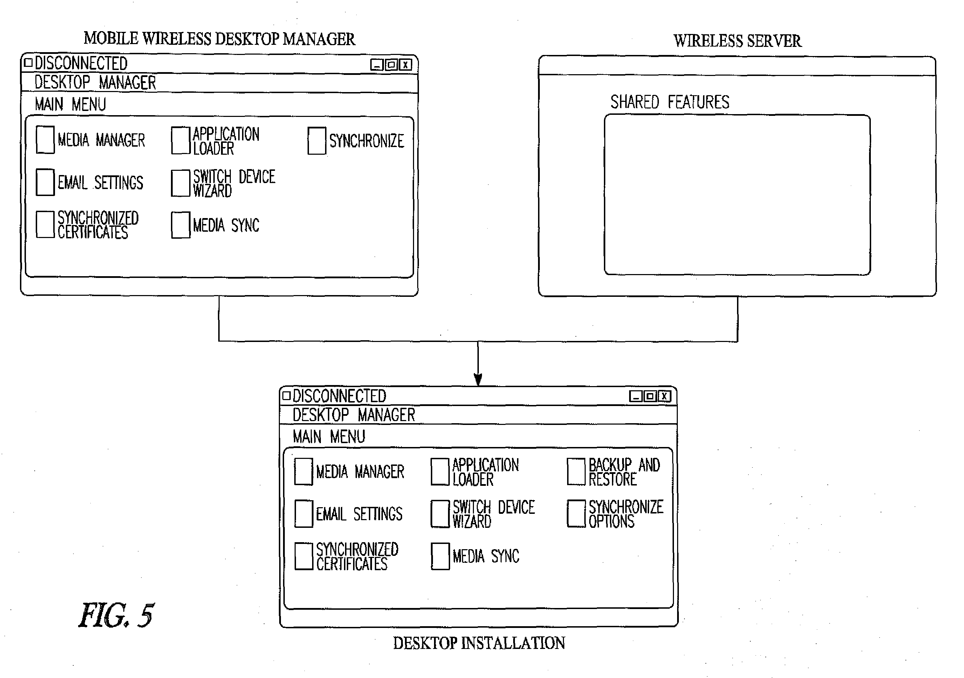

In various embodiments, a UI for managing media files on a device and pending transfers is provided. The UI may include graphical indicators for status (e.g., on device, on PC, etc) and/or actions (e.g., download, purchase, preview, email, play remotely). Some example UI screens from a device are provided in Figures 5 - 10.

The embodiments shown in Figures 1-4 may be implemented as a desktop application to synchronize media content with a mobile wireless communications device. The embodiments shown in Figure 1-4 may also allow a user to use a mobile wireless communications device to browse and synchronize a library on a PC with a library on the mobile wireless communications device.

In various embodiments, device configurations and operational methods are provided for a user of a mobile wireless communications device to remotely view and/or manage their music home music libraries directly from their mobile wireless communications device with the ability to synchronize/transfer music through wired connectivity and/or wirelessly and justifies them within their context of use. Such transfer may be realized in a personal computer (PC). Such transfer may be realized in a wireless server in which the user and/or the mobile wireless communications device are registered as being allowed to enter into such transfers. The wireless server may be configured in a personal computer. The mobile wireless communications device may be a handheld device such as a cell phone-type device. The mobile wireless communications device may be a portable computer such as a lap-top computer. Such configurations and operating structures provide a straight-forward user friendly way, both in a user's mobile wireless communications device and in a personal computer of the user, for managing multimedia files, audio files, video files, and/or combinations thereof, belonging to a user or which the user is allowed to access.

In various embodiments, transfer/sync of multimedia files, audio files, video files, and/or combinations thereof between a computer (and associated media managers of the computer) and a mobile wireless communications device may be accomplished using a number of mechanisms. The transfer/sync between the mobile wireless communications device and the wireless server maybe accomplished through a USB connection. The transfer/sync between the mobile wireless communications device and the wireless server maybe accomplished through a Wi-FI communication session. The transfer/sync between the mobile wireless communications device and the wireless server maybe accomplished over wide area network (WAN) such as a wireless network.

In various embodiments, a mobile wireless communications device is configured with hardware, software, and combinations thereof to view offline, from its associated PC or associated wireless server and offline from the Internet, a library or libraries that may include multimedia files, audio files, video files, photos, videos, podcasts, and/or combinations thereof in the mobile wireless communications device. Such libraries may include libraries of iTunes®, Windows Media Player®, other music libraries, video libraries, and other multimedia libraries. The mobile wireless communications device may include executable instructions allowing its user to view, edit, delete, and schedule multimedia, music, video, and/or combinations for sync between the mobile wireless communications device and its associated personal computer or wireless server. All changes/requests/transfers may occur automatically upon establishment of one of more of USB, Wi-Fi, or WAN connections to the associated personal computer or wireless server. In various embodiments, the personal computer may be configured with appropriate instrumentalities to operate as a wireless server. The hardware and software of the mobile wireless communications device may include a multimedia sync application having a remote management tool to manage a user's libraries of the user's PC, such as but not limited to music from the user's iTunes® or Windows Media Player® (WMP), directly from the mobile wireless communications device. Various embodiments provide functions to manage, play, and sync multimedia presentations, video, and/or music that bridge the gap between PC sync and remote access to realize media management from a handheld wireless device rather than limiting such management to a desktop.

In various embodiments, mobile wireless communications devices are configured to allow offline access to a user's entire PC music library and to allow a 2-way sync, including wireless, between the mobile wireless communications device and the target media manager on a user's PC. For example, a mobile wireless communications device may be configured to schedule downloads and syncs of media avoiding limitations associated with streaming the media content directly to the handset. The mobile wireless communications device may be configured with a remote management application and a wireless sync application, where each has access (an optimized copy) of the user's media library directly from the mobile wireless communications device. Access to this library may not require a network connection to an associated PC or a server on the Internet. The library may be arranged as a multimedia library, a music library, a video library, or a combination thereof. In an embodiment, an optimized version of a user's music library may be contained on the user's mobile wireless communications device allowing for offline viewing and management such that only the optimized music library file (i.e. an "index") is present on the user's mobile wireless communications device, not the actual songs themselves. Any edits or requests for download/sync will sync with the user's associated PC upon connection via USB, WAN, or WLAN (wireless local area network). New media content, such as new music content, that have been requested for download may be contained in a download "manager"/queue and may be sent to the user's device upon the next USB or Wi-Fi connection. The download may be sent on the next connection in a wireless network to which the computer is coupled. In an embodiment, should the user choose, they can force transfer/download of any item in the pending download queue over a cellular network.

In various embodiments, a mobile wireless communications device may be configured with hardware and software that provide: simple ease of use for the user, integration between the mobile wireless communications device and a desktop manager and/or a media sync application of a wireless server configured in a personal computer, support of USB sync, WLAN sync, WAN sync, or sync using combinations thereof between a user's PC and their mobile wireless communications device, integration with different media players such as but not limited to iTunes® and Windows Media Player®, ability for a user to view their media libraries directly from the mobile wireless communications device without a network connection for viewing via a small/optimized copy of the libraries, ability to view library content by album, artist, genre, playlists, ability to add music, such as but not limited to individual songs, albums, artists, playlists to a download manager/queue, ability to transfer/synchronize media in the download queue with the user's mobile wireless communications device upon next USB or Wi-Fi connection to their associated PC or associated PCs, and a 2-way sync with media libraries on the users home PC. A 2-way allows for activity on a mobile wireless communications device to be conducted in a manner similar to the activity of the PC. For example, if a user deletes music or creates/edits a playlist from their mobile wireless communications device, the data can be transmitted wired and/or wirelessly, and these changes reflected in the media libraries on the user's associated PC, which may include iTunes® and WMP among others. Further, if a user deletes music or creates/edits a playlist from their associated PC via one or more libraries on the PC, the data can be transmitted wired and/or wirelessly, and these changes reflected on the mobile wireless communications device. For example, new media content that have been requested for download may be contained in a download manager/queue and may be sent to the user's mobile wireless communications device upon the next USB, Wi-Fi, or wireless network connection. Should the user choose they can force transfer/download any item in the pending download queue over a cellular network.

In various embodiments, a mobile wireless communications device may be configured to operate with any operating system that may be used in a cellular device. The mobile wireless communications device may be configured with access to media functions with external controls to virtually provide for unlimited storage for a user's media, with independence from the PC desktop to manage all user media needs directly from their portable wireless device, with an open marketplace to discover/acquire music directly from a portable wireless device, with automatic updates/sync of activity conducted on a portable wireless device, with ability to play music on a portable wireless device with other devices such as a car, a home stereo, or other such device, with remote access from the user's mobile wireless communications device to access to their PC library of music and other media.

In various embodiments, a media wireless sync feature may be installed on a PC with installation of an associated wireless server, as illustrated in Figure 5. The installation may be realized using a USB connection. The installation may be realized initiated using a USB connection and completed over an Internet connection. The installation may be realized using a Wi-Fi connection. The installation may be realized initiated using a Wi-Fi connection and completed over an Internet connection. After completion of the installation of the media wireless sync feature, a message indicating that the media wireless features/functionality are enabled may be provided to the user via the mobile wireless communications device, the PC, and/or both.

The media sync application of the mobile wireless communications device may support multiple mobile wireless communications device /users within a home, based on a registration, for example based on a personal identification (PIN). The libraries and the sync to these libraries may be partitioned among the various users of the PC. For example, one person may choose to sync music with one library such as iTunes®, another person may choose to sync with another library such as Windows Media Player®, and a third person may choose to sync with both libraries. The user interface of the wireless server on the PC may allow for dynamic selection of supported media managers as well as remember the last media manager (store the identity of the last media manager or last several media managers) to which a specific mobile wireless communications device synchronized with it and to remember preferences associated with the synchronization. In an embodiment, a file may be specified not to be transferred to the mobile wireless communications device, unless the file is supported by the mobile wireless communications device. Users may be made aware of this through a graphic user interface, if a specific file or file type has been identified as not being selectable for sync. For example, music files that are not to be synced may be shown using an icon or other indicator of a lock condition, when a user is viewing their music library from the mobile wireless communications device.

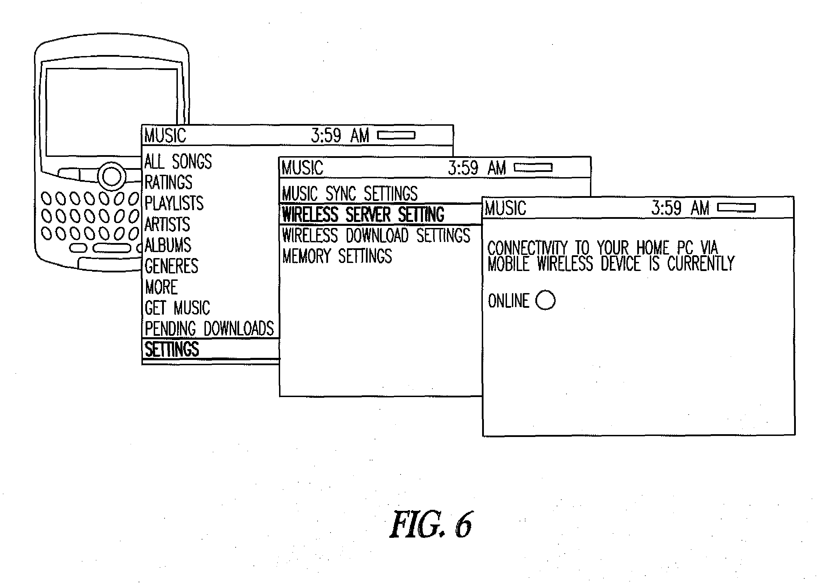

From the user's mobile wireless communications device, the user may observe the status of connectivity to their home PC via a wireless server on the home PC. This view can enable the user to determine if they are able to sync and/or download content via Wi-Fi, WAN, or other connection. Figure 6 illustrates a non-limiting example of a user interface showing connectivity. A media sync application provides a user with an ability to view (offline) either a media library directly from a mobile wireless communications device allowing them to view, edit, delete, and schedule music for sync. All changes/requests/music transfers can occur upon a USB, Wi-Fi, or WAN connection to their home PC. With a wireless server on a home PC offline, an error message may be generated to indicate the status of the wireless server when attempting to force a transfer or download via a network connection.

An optimized version of a user's music library contained by a library in the user's PC may be contained on the user's device allowing for offline viewing and management. The optimized media library file may be arranged as an index on the user's mobile wireless communications device. Media filed in the mobile wireless communications device may be stored in the mobile wireless communications device separate from the optimized media library file. During setup (and at any time) of the desktop media sync application, users can select which media manager or managers that they would like configured for remote management and wireless sync.

From a user's mobile wireless communications device, a user may able to enter the total music library or individual libraries and sort by all songs (name), artist, album, and music genre. The user may also be able to view by all playlists, standard and smart (automatic) as well as those contained in folders. When viewing a playlist from the mobile wireless communications device, users also may able to view/sort by all songs (name), artist, album, and music genre. Viewing and sorting is not limited to music but may be applied to photos, video, and other multimedia presentations. With the optimized music library file as an index present on the users mobile wireless communications device, and not all the actual songs themselves contained within the library, the optimized library may be sufficiently small allowing the library to be stored on the internal memory of the user's mobile wireless communications device. In various embodiments, swapping memory cards does not disable remote management.

In various embodiments, the optimized media library file on the user's mobile wireless communications device may be refreshed and kept in sync with the media libraries on the user's PC. This sync may provide automatic updating so that the most up to date view of the media library accessible to the PC is available to the user from their mobile wireless communications device. An updated/synchronized copy of the media library may be transferred to the user's mobile wireless communications device upon the next USB/WLAN/WAN connection to the desktop music sync application.

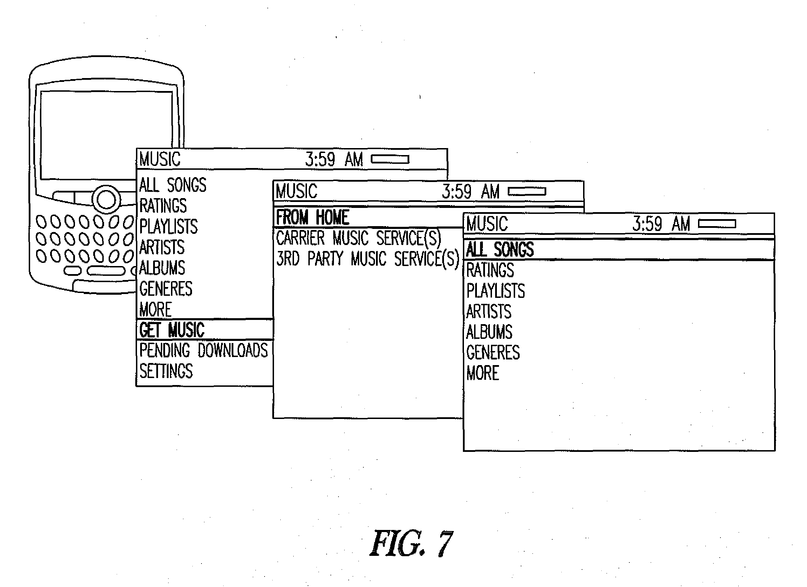

Figure 7 shows an example of a user interface when accessing a home music library. The user interface is not limited to a home music library but may be libraries of other multimedia presentations. As shown, the user interface provides access and management of a user's music library, for example a user's iTunes® or WMP music library, that is easy to use, intuitive, and be structured in such a way that it allows users to easily view their music libraries directly from the music application on the mobile wireless communications device.

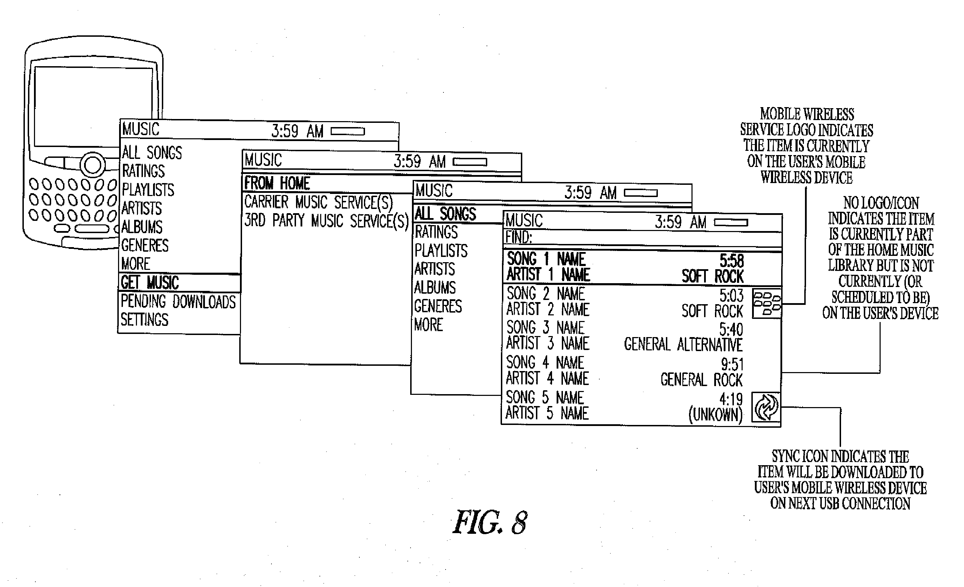

In viewing their home media library from the mobile wireless communications device, the view may be provided in a manner that it similar to how the media library is displayed on the local PC. Figure 8 illustrates an example of viewing a media library that is easy to use, intuitive, and structured in such a way that it allows users to easily view their media library directly from the media application on the mobile wireless communications device. The view may also provide a view of media that is on their mobile wireless communications device vs. what is not on the mobile wireless communications device with respect to what is in the home libraries. The view may also provide a view of media that has been added to the media download manager as pending downloads that will be transferred/synchronized with their device upon the next USB sync, WLAN sync, or WAN sync with the mobile wireless communications device. The user may also be provided with an indication of the total amount of memory corresponding to media on their mobile wireless communications device including free/available memory, media at an associated PC such as a home PC, and media in the download manager pending download. The media may be further presented in various categories such as music, video, and other multimedia presentations.

In various embodiments, when a user views their home music library, it may be similar to how they view the media local to their mobile wireless communications device to edit the home media library. Users may be able to edit their home music library from a remote management application with a wireless sync feature allowing them to delete media, such as music, on a selected basis and/or edit playlists. For example, the selected basis allows for editing music based on individual songs, albums, artists, genres, or playlists. For example, using edit playlists as a basis allows for adding and/or removing songs contained in one or more playlists. These edits may sync with the users PC and the corresponding media manger library or libraries upon the next USB/WLAN/WAN connection to the desktop media sync application on their home PC. Delete actions may be accompanied by a prompt inquiring as to whether or not the user would like to delete the item from the specified library on the mobile wireless communications device only (keep file on computer) or from the specified library on the associated computer as well.

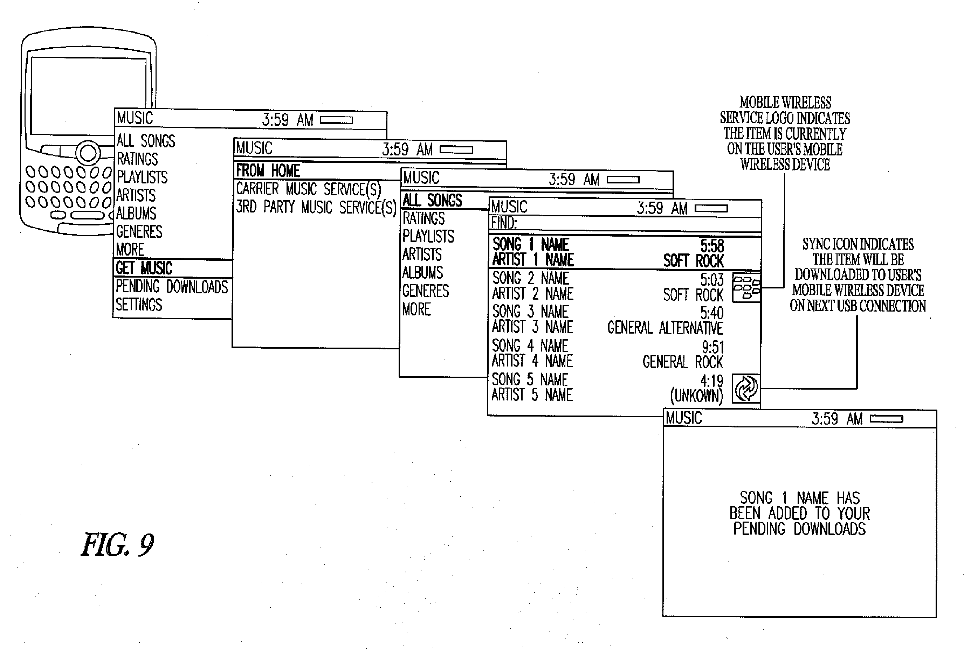

Figure 9 shows an example of a user interface with respect to adding music to the download manager. While viewing a user's home music library, the user may add the following to a download music manager as pending downloads: individual songs, individual albums, individual artists (all songs by an individual artist), individual genres (all songs contained in a single genre), entire playlists, and other categories for arranging music. Additions are not limited to music, but apply to other multimedia presentations. As an example, this addition feature can be shown as a menu item called "sync with mobile wireless communications device " or "add to downloads" when any of the above categories is highlighted. This may be similar to how adding items local to a mobile wireless communications device is handled with respect to playlists local to the mobile wireless communications device. Users may be able to view all items that are currently "pending sync/download." A remote media access implementation may notify a user if they are attempting to schedule/sync content whose total is larger than the device's available/free memory (external plus internal). The user may be notified/prompted on their device of the total content they are attempting to sync (i.e. what is in the media download manager or "pending downloads" queue) and the available space on the mobile wireless communications device and be instructed to remove content from the sync list or device.

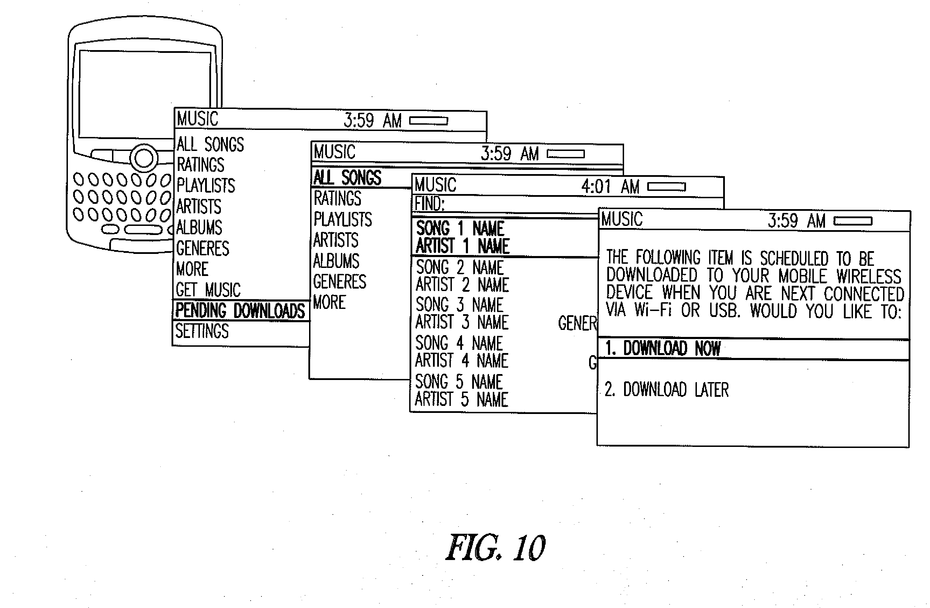

Figure 10 shows an example of a user interface for viewing a download manager. This view provides users with the ability to view the media download manager for pending downloads directly from the media home screen of the mobile wireless communications device media player. For example, music that has been requested for download (added to the pending downloads/queue) can be delivered to the mobile wireless communications device upon the next USB, Wi-Fi, or WAN connection. Viewing the items in the pending downloads list may be similar to viewing music on a users mobile wireless communications device and can be sortable (with totals next to each in brackets) by all songs, album, artist, genre, playlists, and other categories.

A user may be provided with a view that indicates in a straight forward manner the total amount of memory corresponding to individual items in the download manager and to total items in the download manager. The following options may be available to the user when viewing the contents of the download manager: (1) delete (i.e. remove items from the download manager), which may include an item no longer being requested for transfer/sync with the device, and (2) download now, which allows for manual force transfer of media via a WAN. Users may be prompted that this may result in cellular data charges as per their existing mobile wireless communications device data plan. Other options may be provided.

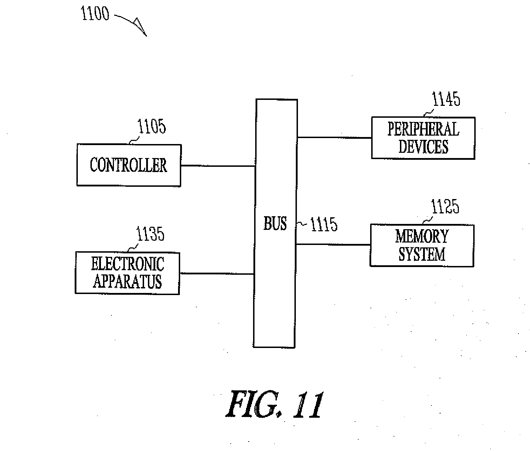

Figure 11 depicts a diagram of an embodiment of a system 1100 having a controller 1105 and a memory system 1125. System 1100 also includes electronic apparatus 1135 and a bus 1115, where bus 1115 provides electrical conductivity among the components of system 1100. In an embodiment, bus 1115 includes an address bus, a data bus, and a control bus, each independently configured. In an alternative embodiment, bus 1115 uses common conductive lines for providing one or more of address, data, or control, the use of which is regulated by controller 1105. Bus 1115 may be realized as multiple busses. In an embodiment, electronic apparatus 1135 is additional memory system configured in a manner similar to memory system 1125. In an embodiment, additional peripheral device or devices 1145 are coupled to bus 1115. In an embodiment, peripheral devices 1145 include displays, additional storage memory system, and/or other control devices that may operate in conjunction with controller 1105 and/or memory system 1125. In an embodiment, controller 1105 is a processor.

Controller 1105 and memory system 1125 can be arranged to manage media content and associated information on system 1100. In an embodiment, system 1100 is arranged as a PC. The PC may include instrumentality distributed throughout the PC to operate as a wireless server. System 1100 arranged as a PC can operate according to any of the various embodiments discussed herein to manage media content and associated information within the PC and/or in conjunction with one or more mobile devices such as mobile wireless communications devices.

In an embodiment, system 1100 is arranged as a mobile device. The mobile device may be a mobile wireless communications device. System 1100 arranged as a mobile device can operate according to any of the various embodiments discussed herein to manage media content and associated information within the mobile device, and/or in conjunction with a PC or other apparatus having software and/or hardware to manage media content.

Various embodiments or combination of embodiments for apparatus and methods for a system, such as a PC, to manage media content, as described herein, can be realized in hardware implementations, software implementations, and combinations of hardware and software implementations. These implementations may include a machine-readable medium having machine-executable instructions, such as a computer-readable medium having computer-executable instructions, for operating the system in a relationship with one or more mobile devices such that media content and associated information is managed between the system and the mobile device. The communications of the system with a mobile wireless communications device can be conducted on a secured basis. The machine-readable medium is not limited to any one type of medium.

Various embodiments or combination of embodiments for apparatus and methods for a mobile device, such as a mobile wireless communications device, as described herein, can be realized in hardware implementations, software implementations, and combinations of hardware and software implementations. These implementations may include a machine-readable medium having machine-executable instructions, such as a computer-readable medium having computer-executable instructions, for operating the mobile device to manage its media content and associated information within the mobile device, in conjunction with a system, such as a PC, and/or with respect to other mobile devices. The communications between a mobile wireless communications device and the system can be conducted on a secured basis. The machine-readable medium is not limited to any one type of medium.

Although specific embodiments have been illustrated and described herein, it will be appreciated by those of ordinary skill in the art that any arrangement that is calculated to achieve the same purpose may be substituted for the specific embodiments shown. It is to be understood that the above description is intended to be illustrative, and not restrictive, and that the phraseology or terminology employed herein is for the purpose of description. Combinations of the above embodiments and other embodiments will be apparent to those of skill in the art upon studying the above description.

## Claims

1. A computerized system comprising:
at least one subsystem that identifies one or more sources of media content;
at least one subsystem that unifies media content to create a superset of available content from the one or more sources of media content;
at least one subsystem that allows a device to synchronize with the available content from the one or more sources of media content; and
at least one subsystem that presents a graphical user interface through which a user may browse a unified view of the available content and access the available content from any of the one or more sources of media content.

2. The computerized system of claim 1 further comprising at least one subsystem that provides a discovery mechanism for one or more connectors that are capable of communicating with the one or more sources of media content.

3. The computerized system of claim 1 further comprising at least one subsystem that identifies when the device is connected to the computerized system.

4. The computerized system of claim 1 further comprising at least one subsystem that filters the available content for the device.

5. An apparatus comprising:
a processor;
a machine accessible medium to store instructions, the instructions when executed by the processor cause the apparatus to:
identify media content available from two or more sources;
create unified information about the media content
monitor the two or more sources for a change to the media content; and
upon detection of the change, update the unified information.

6. The apparatus of claim 5 further comprising instructions to determine specific types of the two or more sources from which media content can be identified.

7. A mobile wireless device comprising:
a processor;
a machine accessible medium to store instructions, the instructions when executed cause the processor to:
display on available content from two or more sources of media content;
request a change to media content already present on the mobile wireless device; and
update the content already present on the mobile wireless device with a subset of the available content from the two or more sources of media content.

8. A computerized method comprising:
discovering one or more sources of media content;
creating a desired library comprising a subset of available content from the one or more sources of media content; and
transferring the desired library to a mobile wireless device.

9. The computerized method of claim 8 wherein transferring the desired library comprises adding media content to the mobile wireless device.

10. The computerized method of claim 8 wherein transferring the desired library comprises removing media content from the mobile wireless device.

11. The computerized method of claim 8 further comprising determining how the desired library differs from the content already present on the mobile wireless device.

12. The computerized method of claim 11 further comprising identifying actions to modify the content already present on the device to match the desired library.

13. A computer readable medium having computer executable instructions for executing a method of managing media content, the method comprising:
identifying one or more sources of media content;
unifying available content from the one or more sources of media content;
presenting a graphical user interface through which a user may access the available content; and
allowing a device to synchronize with the available content from the one or more sources of media content

14. The computer readable medium of claim 13 further comprising discovering for one or more connectors that are capable of communicating with the one or more sources of media content.

15. The computer readable medium of claim 13 further comprising identifying when the device is connected to the computerized system.
